# EUROPEAN PATENT SPECIFICATION

(11) **EP 2 990 123 B1**
(45) Date of publication and mention of the grant of the patent: **04.07.2018**
(21) Application number: 14787541.3
(22) Date of filing: 11.04.2014
(51) Int. Cl.: B04C 5/081

(54) **CYCLONE DEVICE**
ZYKLONVORRICHTUNG
DISPOSITIF À CYCLONE

(30) Priority: 23.04.2013 JP 2013090579
(43) Date of publication of application: 02.03.2016
(73) Proprietor: Shizuoka Plant Co., Ltd., Haibara-gun Shizuoka 421-0304 (JP)
(72) Inventor: TODA, Yasuhiro, Haibara-gun Shizuoka 421-0304 (JP)
(74) Representative: Klunker IP Patentanwälte PartG mbB
(86) International application number: PCT/JP2014/060536
(87) International publication number: WO 2014/175083

(56) References cited:
- WO-A1-2010/054912
- DE-A1- 19 612 059
- DE-U1- 9 207 991
- JP-A- S5 131 960
- JP-A- H01 307 466
- JP-A- 2007 038 189
- JP-A- 2013 031 820
- JP-U- S6 164 352
- JP-U- S58 151 457
- US-A- 4 251 243

## Description

### Technical Field

The present invention relates to a cyclone apparatus capable of collecting fine powder in an air current at a high collection rate.

### Background Art

A cyclone apparatus 20 used for classifying powder in an air current has been known as a tangential inlet type cyclone apparatus that includes a cylindrical upper structure (a cyclone body 21) and a lower structure in an inverted conical shape (a conical section 22), as shown in Figure 9.

In the cyclone apparatus, an air current mixed with powder is taken in a tangential direction of the cyclone body 21 from an air current inlet 23 in a swirl. The powder mixed in the air current is separated from the air current by centrifugal force to collide with an internal wall surface of the cyclone body 21 to be decelerated.

After that, the powder decelerated by collision with the internal wall surface of the cyclone body 21 drops by gravity along an internal wall surface of the conical section 22 in an inverted conical shape that is connected to a lower end of the cyclone body 21, and then drops into a powder collection section 24 in a lower portion of the conical section 22 to be collected.

Meanwhile, the air current is discharged to the outside through an air current outlet 25 provided at the center of the cyclone body 21.

With respect of an improvement technique of this kind of cyclone apparatus, for example, Patent Literature 1 (Japanese Patent Publication No. 07-22722) describes a spherical cyclone whose body is formed in a sphere shape. Patent Literature 2 (Japanese Patent No. 2609537) describes a solid-liquid separation method of separating solid particles from suspended and dispersed liquid by allowing the liquid to rotationally pass through along a spherical inner surface in a swirl. Patent Literature 3 (US Patent No. 4 251 243) discloses a cyclonic apparatus for separating solid materials mixed in a gaseous stream which comprises a frustoconical air current inlet section with its larger diameter directed downward and a conical section with its larger diameter directed upward. The air current inlet section comprises an air current inlet for taking solid materials mixed in a gaseous stream from a tangential direction and a cylindrical air current outlet for discharging the gaseous stream.

### Citation List

### Patent Literature

Patent Literature 1: Japanese Patent Publication No. 07-22722
Patent Literature 2: Japanese Patent No. 2609537
Patent Literature 3: US Patent No. 4 251 243

### Summary of Invention

### Technical Problem

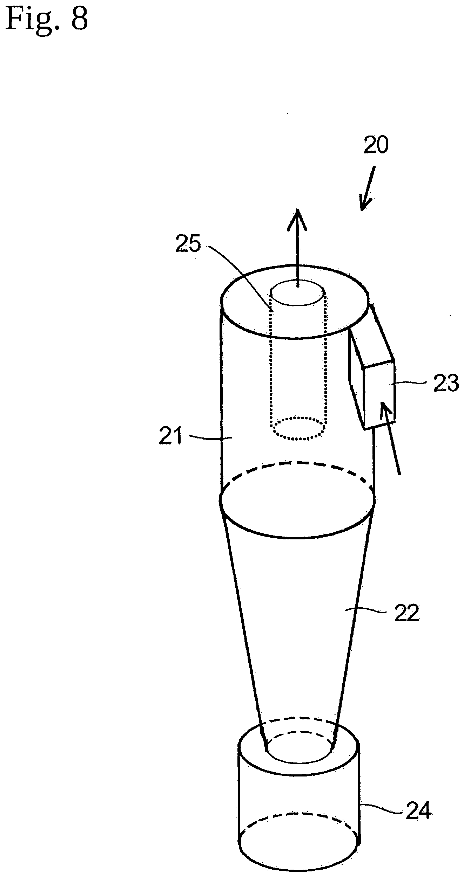

The cyclone apparatus 20 of a conventional tangential inlet type, such as shown in Figure 8, increases angular speed of an air current near the air current inlet 23 of the cyclone body 21 to separate powder mixed in the air current by centrifugal force, as well as allows the powder to collide with the internal wall surface of the cyclone body 21 to be decelerated, and the powder is collected by the conical section 22 in an inverted conical shape provided in a lower portion of the cyclone apparatus 20. Unfortunately, a particle diameter of the powder to be collected is mainly 1 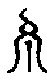 m or more, so that a filter such as a bag filter is separately required to collect fine powder of submicron size.

In addition, although each of cyclone techniques described in Patent Literatures 1 and 2 allows the apparatus itself to be reduced in size by forming a cyclone body in a spherical shape, a collection position of powder and an outlet position of an air current are close to each other. As a result, the powder separated and collected, and an air current may be easily mixed at the collection position of powder to cause improvement in efficiency of separation and collection of fine powder of submicron size to be limited.

The present invention is made in light of the conventional problem above, and it is an object to provide a cyclone apparatus capable of improving collection efficiency of fine powder of submicron size without using a filter, such as a bag filter.

### Solution to Problem

A cyclone apparatus of the present invention separates powder mixed in an air current from a swirling air current to collect the powder, and includes an air current inlet section that is provided with an air current inlet for taking an air current mixed with powder from a tangential direction and that has a diameter gradually increasing downward, and a conical section in an inverted conical shape that is connected to a lower end of the air current inlet section and that has a diameter gradually decreasing downward.

If the "air current inlet section" above has an internal structure with a diameter gradually increasing downward, a specific structure of the air current inlet section is not particularly limited, and thus it is possible to adopt a structure, such as having a hemispheric internal structure, and having a conical internal structure.

At that time, as an aspect of a structure with a hemispheric internal structure, it is possible to adopt a structure, such as a structure in which the whole of an internal wall surface of an air current inlet section has a spherical surface shape, and a structure in which an upper portion of an internal wall surface of an air current inlet section has a shape other than a spherical surface (such as a plane).

### Advantageous Effects of Invention

A cyclone apparatus of the present invention separates powder mixed in an air current from a swirling air current to collect the powder, and includes an air current inlet section that is provided with an air current inlet for taking an air current mixed with powder from a tangential direction of the air current inlet and that has a diameter gradually increasing downward, and a conical section in an inverted conical shape that is connected to a lower end of the hemispheric air current inlet section and that has a diameter gradually decreasing downward. Accordingly, the cyclone apparatus enables separation and collection of fine powder of submicron size mixed in an air current, as well as a dramatic improvement in efficiency of powder collection.

That is, a conventional tangential inlet type cyclone apparatus takes an air current mixed with powder from a tangential direction of an air current inlet section in a swirl to allow the powder mixed in the air current to be separated from the air current by centrifugal force. The powder collides with an internal wall surface of the air current inlet section to be decelerated, and drops below the air current inlet section (into a powder collection section) by gravity to be collected. In contrast, the cyclone apparatus of the present invention takes an air current mixed with powder from the tangential direction of the air current inlet of the air current inlet section, and at the moment of taking the air current into the air current inlet section, angular speed of a swirling flow of the air current rapidly decreases due to an internal structure of the air current inlet section, having a diameter gradually increasing downward, while the powder in the air current is separated by centrifugal force.

As a result, the powder separated from the air current easily drops in the air current inlet section, and then the angular speed of the powder increases in the conical section in an inverted conical shape to allow the powder to collide with a tapered internal wall surface, whereby collection efficiency is improved.

In this way, increasing a difference in angular speed of an air current in a cyclone apparatus more than that in a conventional method enables collection efficiency of fine powder of submicron size to be increased.

In the structure above, if a height Ha of the air current inlet section is set less than a height Hb of the conical section in an inverted conical shape, it is possible to prevent an air current descending in a swirl in the conical section from excessively increasing in speed. This setting allows fine powder of submicron size to be carried to the powder collection section (a collection box) while floated on the air current. In addition, an ascending air current in the conical section is prevented from excessively increasing in speed to enable fine powder of submicron size to hardly ascend upward. Even if fine powder of submicron size remain in the air current ascending in the conical section, an air current descending in a swirl around the fine powder allows the fine powder of submicron size to be brought back downward and carried to the powder collection section.

### Brief Description of Drawings

[Figure 1] Figure 1 is a front view of a cyclone apparatus in accordance with a first embodiment of the present invention.
[Figure 2] Figure 2 is a plan view of the cyclone apparatus of the first embodiment above.
[Figure 3] Figure 3 is a graph showing a distribution of particle size of powder collected by a conventional tangential inlet type cyclone apparatus.
[Figure 4] Figure 4 is a graph showing a distribution of particle size of powder collected by the cyclone apparatus of the first embodiment above.
[Figure 5] Figure 5 is a sectional view of a cyclone apparatus in accordance with a second embodiment of the present invention as viewed from the front of the cyclone apparatus.
[Figure 6] Figure 6 is a plan view of the cyclone apparatus of the second embodiment above.
[Figure 7] Figure 7 shows a state where an air current containing powder flows in the cyclone apparatus of the second embodiment above as with Figure 5.
[Figure 8] Figure 8 is a schematic illustration showing a structure of the conventional tangential inlet type cyclone apparatus.

### Description of Embodiments

A cyclone apparatus in accordance with the present embodiment separates powder mixed in an air current from a swirling air current to collect the powder, and includes a hemispheric air current inlet section that is provided with an air current inlet for taking an air current mixed with powder from a tangential direction and that has a diameter gradually increasing downward, and a conical section in an inverted conical shape that is connected to a lower end of the hemispheric air current inlet section and that has a diameter gradually decreasing downward. Accordingly, although the conventional tangential inlet type cyclone apparatus sets a limit particle diameter of power to be collected at 1µm or more, the cyclone apparatus of the present invention enables collection of fine powder of submicron size.

The air current inlet section, which is an upper structure of the cyclone apparatus in accordance with the present embodiment, takes an air current mixed with powder from an air current inlet and swirls the air current along an internal wall surface thereof in a tangential direction, and is connected to an upper end of the conical section to project in a hemispheric shape to form a structure like a bowl with its open side down.

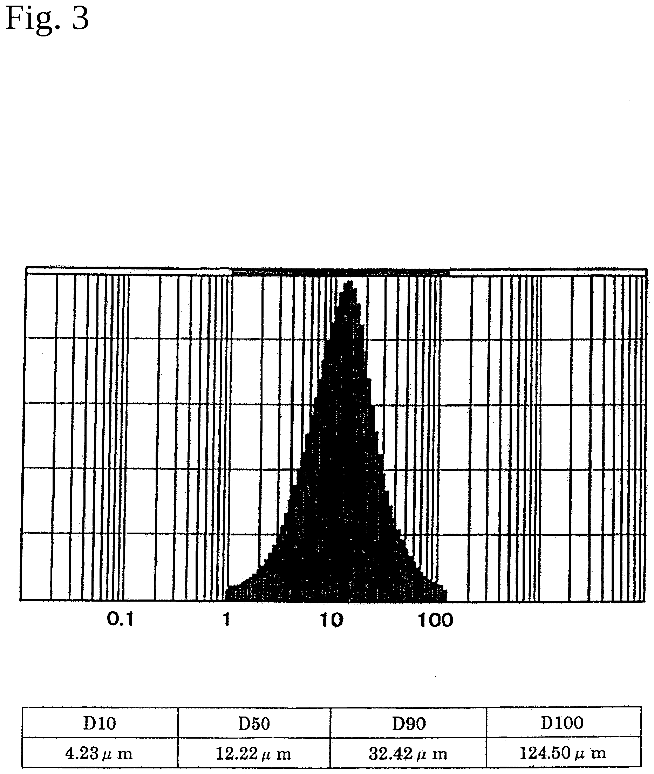

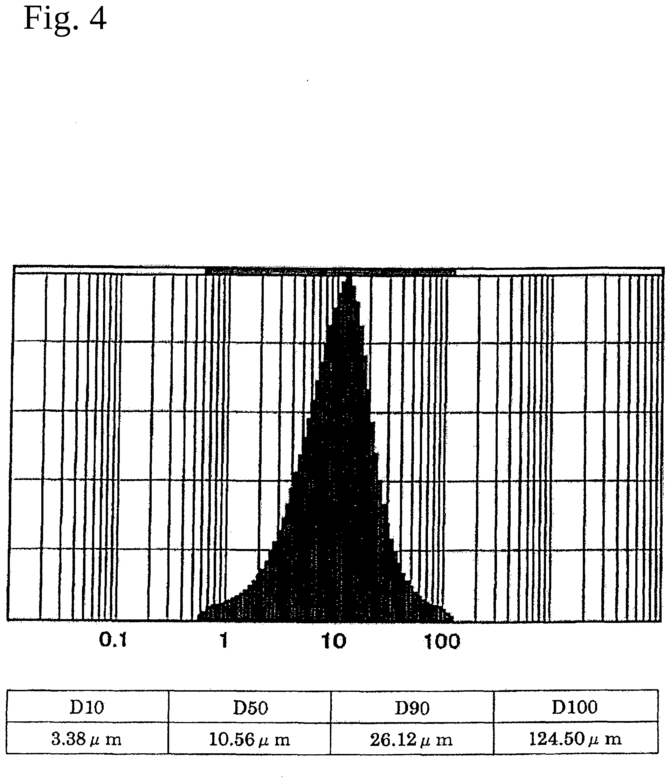

The air current inlet section configured to gradually increase downward in diameter (expanding downward) enables angular speed of an air current that is vigorously taken to be temporarily reduced, thereby allowing even fine powder with a particle diameter of 1 µm or less to be separated and collected (refer to Figures 3 and 4 described later).

The conical section, which is a lower structure of the cyclone apparatus of the present embodiment, is connected to the lower end of the air current inlet section, and is formed in an inverted conical shape (gradually decreases downward in diameter). Then, the conical section allows powder mixed in a swirling air current to be separated by centrifugal separation as well as to collide with the internal wall surface in an inverted conical shape to drop the powder, thereby separating fine powder of submicron size from the air current to collect the fine powder.

The cyclone apparatus of the present embodiment allows the height Ha of the air current inlet section and the height Hb of the conical section to be set in a range satisfying the following: Ha < Hb.

This setting enables fine powder of submicron size or powder of micron order contained in the air current to be more efficiently separated and collected.

Here, the height Ha of the air current inlet section equal to or more than the height Hb of the conical section relatively reduces a space in the conical section for allowing an air current containing powder taken along the internal wall surface of the air current inlet section on a tangential line to revolve at a sufficient angular speed. As a result, separation efficiency tends to extremely deteriorate.

It is preferable that a ratio (Ha/Hb) of respective heights of the air current inlet section and the conical section is set within a range from 1/10 to 1/5. If the ratio (Ha/Hb) of the heights is less than 1/10, the conical section increases in length to cause an air current containing powder to fail to reach a powder collection section, whereby separation efficiency deteriorates.

Conversely, if the ratio (Ha/Hb) is more than 1/5, the air current inlet and a collection position of powder to be collected are close to each other to cause excessive speed of an air current, so that powder in the powder collection section or the collection box is blown away to cause the separation efficiency to tend to deteriorate.

The embodiment is set as follows: an inner diameter of a connection portion between the air current inlet section and the conical section is set from 200 mm to 250 mm; the height Ha of the air current inlet section is set from 70 mm to 100 mm; the height Hb of the conical section is set from 200 mm to 1000 mm; and the height Ha of the air current inlet section is set less than the height Hb of the conical section.

### Embodiments

### (First Embodiment)

Hereinafter, a cyclone apparatus in accordance with a first embodiment of the present invention will be described with reference to accompanying drawings.

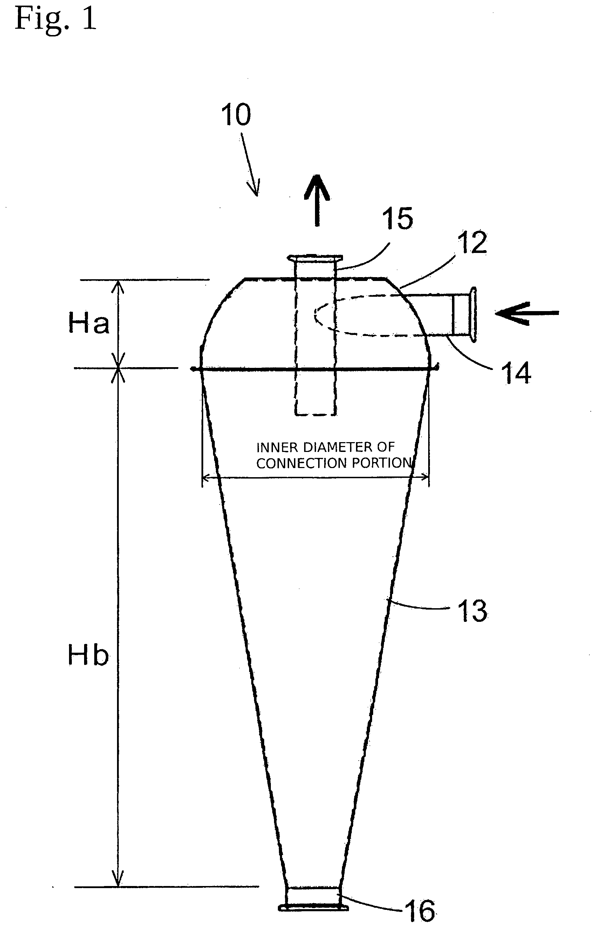

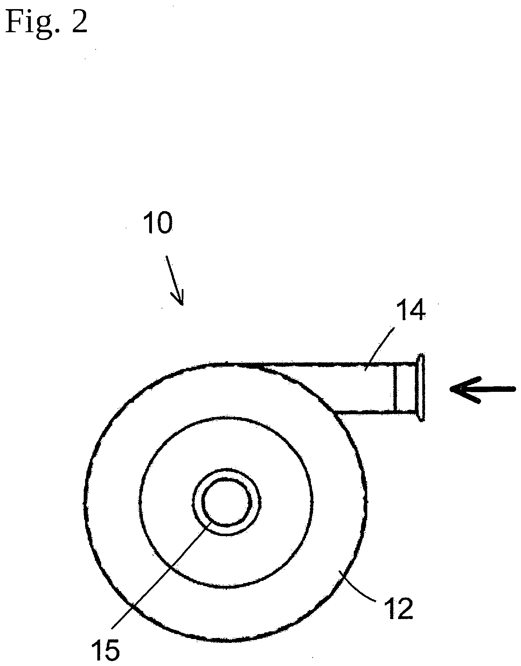

As shown in Figures 1 and 2, a cyclone apparatus 10 of the present embodiment includes an air current inlet section 12 of an upper structure, and a conical section 13 of a lower structure.

The air current inlet section 12 has a hemispheric internal structure with a diameter gradually increasing downward, and is provided at its one end with an air current inlet 14 through which an air current containing powder is taken in a tangential direction of the air current inlet section 12 so that a swirling air current along an internal wall surface thereof is generated.

The conical section 13 of the lower structure is connected to a lower end of the hemispheric air current inlet section 12 and has an internal structure in a tapered inverted conical shape with a diameter gradually decreasing downward so as to increase angular speed of the air current decelerated in the air current inlet section 12 of the upper structure.

The air current inlet section 12 is provided at its center position with an air current outlet 15 which vertically penetrates the air current inlet section 12, and through which an air current after powder has been separated is discharged to the outside.

The conical section 13 of the lower structure is provided at its lower end with a powder collection section 16 that collects a separated powder.

In the present embodiment, an inner diameter of a connection portion between the hemispheric air current inlet section 12 and the conical section 13 is set at 215 mm, as well as the height Ha and the height Hb of the conical section 13 are set at 85 mm and 515 mm, respectively. That is, a ratio of respective heights (Ha/Hb) of the air current inlet section 12 and the conical section 13 is set at 1/6 so that a predetermined taper is formed in the conical section 13. Then, the powder collection section 16 has a bore diameter of about 50 mm.

An air current containing powder taken into the air current inlet section 12 from the air current inlet 14 flows along an internal wall surface of the air current inlet section 12 to form a swirling air current in which centrifugal force is applied to the powder in the air current to allow the powder to collide with the internal wall surface of the air current inlet section 12, whereby the powder is separated from the air current.

Since the air current inlet section 12 has an internal structure with a diameter gradually increasing downward, the swirling air current is reduced in angular speed in the air current inlet section 12.

As a result, powder separated from the air current in the air current inlet section 12 easily drops through the air current whose angular speed decreases, and then the powder descends along a tapered internal wall surface of the conical section 13 in an inverted conical shape, connected to the lower end of the air current inlet section 12, to be collected in the powder collection section 16.

Meanwhile, the air current after powder has been separated becomes a swirling flow whose diameter decreases at a lower portion of the conical section 13 as well as becomes an ascending air current at a central portion of the conical section 13 to be discharged to the outside from the air current outlet 15 provided at a center portion of an upper portion of the air current inlet section 12.

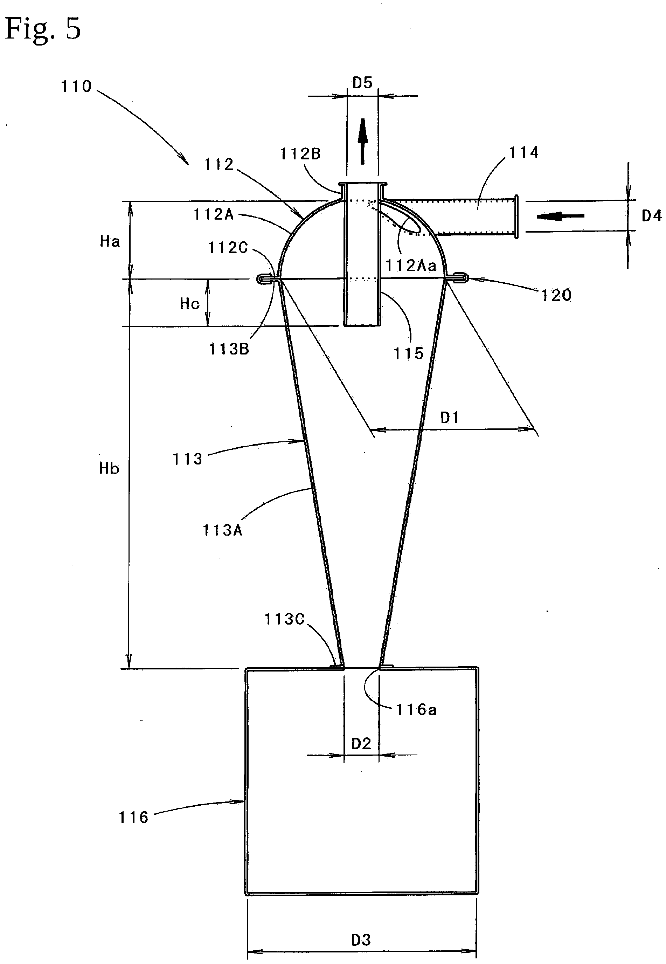

Results of a comparative test performed with a conventional apparatus to verify an effect of powder collection in the cyclone apparatus in the present embodiment will be described below. Figures 4 and 5 are graphs each of which shows a distribution of particle size of powder collected in the comparative test.

### Test Conditions

(a) Weather: cloudy
(b) Temperature: 14°C
(c) Humidity: 56.0%
(d) Test material: carbon
(e) Tester: cyclone mill 150BMS type
(f) Pulverizer motor rotation speed: 15000 rpm
(g) Powder collection blower frequency: 50 Hz
(h) Intake machine screw frequency: 50 Hz
(i) Material input: 500 g

### Test result

### (a) Comparison of Collection Rate

Apparatus A (a conventional type cyclone apparatus): a collection rate of 81.3%
Apparatus B (the cyclone apparatus of the present embodiment): a collection rate of 94.0%

Under the same condition where an input amount of carbon is 500 g, a cyclone body of an upper structure of a cyclone apparatus (the air current inlet section of the present embodiment) was changed in shape, diameter, and length to measure change of a collection rate.

It is perceived that the collection rate of the cyclone apparatus of the present embodiment shown in Figure 1 is 1.16 times higher than the collection rate of the conventional cyclone apparatus.

### (b) Comparison of Distribution of Particle Size

Figures 4 and 5 are graphs showing distributions of particle size of fine powder collected by the conventional cyclone apparatus and the cyclone apparatus of the present embodiment, respectively. Under the same condition, change of a distribution of particle size was measured.

The cyclone apparatus of the present embodiment was able to collect powder with a particle diameter less than 1.060 µm and equal to or more than 0.630 µm, which the conventional cyclone apparatus was not able to collect.

Thus, it is perceived that an average particle diameter (D50) that is a peak of particle diameters of the powder collected by the cyclone apparatus of the present embodiment is smaller by 1.66 µm than an average particle diameter that is a peak of particle diameter of the powder collected by the conventional cyclone apparatus.

In addition, it is obvious that even a cumulative value 10% (D10) and a cumulative value 90% (D90) of the particle diameter of the powder collected by the cyclone apparatus of the present embodiment are smaller than those by the conventional cyclone apparatus by 0.85 µm and 6.3 µm, respectively.

As described above, the cyclone apparatus 10 of the present embodiment is able to improve efficiency of separation and collection of fine powder of submicron size without using a filter such as a bag filter.

There is a following estimated reason why the efficiency of separation and collection is improved.

That is, the internal structure with a diameter gradually increasing downward of the air current inlet section 12 allows an air current taken in a tangential direction of the air current inlet section 12 to decrease in angular speed while the air current swirls in a hemisphere. Then, the structure gradually decreasing downward of the conical section 13 of the lower structure allows a swirl diameter of the air current to decrease, thereby increasing angular speed of the air current.

In this way, increasing a difference in angular speed allows fine powder of submicron size to be easily separated from an air current by centrifugal action and collected.

The cyclone apparatus 10 has no possibility of mixture of foreign material caused by a bag filter as well as no clogging that occurs in a bag filter, so that maintenance is facilitated and continuous operation for countless hours is possible.

In addition, a conventional cyclone apparatus, in which a swirling flow is formed in a cylindrical upper portion to separate powder by centrifugal separation, requires a blower with a large air flow, or the like due to a large pressure loss.

In contrast, the cyclone apparatus of the present embodiment 10 is allowed to be reduced in size as compared with a cyclone apparatus with a cylindrical upper portion, as well as is excellent in saving energy because a less pressure loss in the cyclone apparatus allows the apparatus to be driven by a blower with a small air flow, or the like.

### (Second Embodiment)

Next, a second embodiment of the present invention will be described.

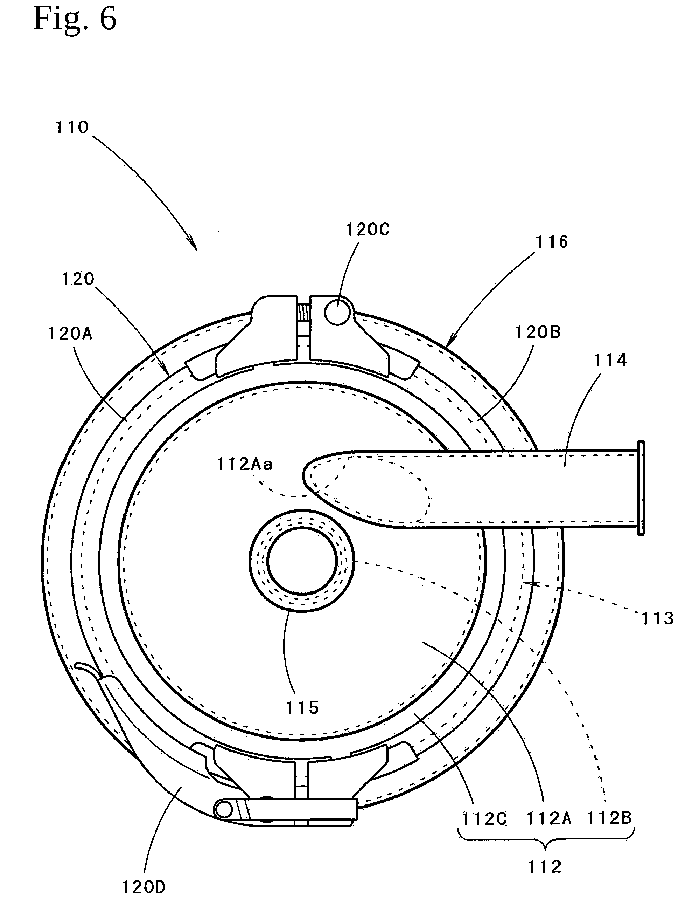

Figure 5 is a sectional view of a cyclone apparatus 110 in accordance with the present embodiment as viewed from the front of the cyclone apparatus, and Figure 6 is a plan view of the cyclone apparatus 110.

As shown in Figures 5 and 6, the cyclone apparatus 110 of the present embodiment includes a hemispheric air current inlet section 112 with a diameter gradually increasing downward, a conical section 113 in an inverted conical shape that is connected to a lower end of the air current inlet section and that has a diameter gradually decreasing downward, and a powder collection section 116 that is connected to a lower end of the conical section 113.

Even in the present embodiment, the air current inlet section 112 is provided with an air current inlet 114 for taking an air current containing powder into the apparatus, and with an air current outlet 115 for discharging the air current in which the powder has been separated to the outside. Specific structure of those will be described later.

The air current inlet section 112 includes: a spherical surface portion 112A in which all areas of an internal wall surface is formed in a hemispheric shape along a spherical surface; a cylindrical opening portion 112B provided at an upper end position of the spherical surface portion 112A (a center position of the spherical surface portion 112A in a plan view), opening upward; and an outer periphery flange portion 112C provided at a lower end position of the spherical surface portion 112A (a position at an outer peripheral edge in a plan view), extending horizontally.

Since the cylindrical opening portion 112B is formed in the upper end position of the spherical surface portion 112A as above, a height Ha of the air current inlet section 112 (accurately, a height of the internal wall surface of the spherical surface portion 112A) is slightly less than half of an inner diameter D1 at the lower end position.

The conical section 113 is composed of a cylindrical body portion 113A formed in an inverted conical shape, and an upper end flange portion 113B and a lower end flange portion 113C that are provided at upper and lower ends of the body portion 113A, respectively, extending horizontally.

The conical section has a height Hb that is set at a value more than twice the height Ha of the air current inlet section. Specifically, the height Hb is set at a value of the order of 1/6 of Ha/Hb.

The conical section 113 has an inner diameter at its upper end position that is set at the same value of the inner diameter D1 at the lower end position of the spherical surface portion 112A of the air current inlet section 112. The conical section 113 also has an inner diameter D2 at its lower end position that is set at a value of the order of 1/6 to 1/4 of D1 with respect to the inner diameter D1 at the upper end position.

The conical section 113 is fixed to the air current inlet section 112 with a ring-shaped fixture 120 so as to be detachable by attaching and detaching the ring-shaped fixture 120.

The ring-shaped fixture 120, as shown in Figure 6, includes a pair of half-split rings 120A and 120B that is allowed to be relatively rotated with respect to a pin 120C. Then, the ring-shaped fixture 120 is attached by fitting the pair of half-split rings 120A and 120B to the outer periphery flange portion 112C of the air current inlet section 112 and the upper end flange portion 113B of the conical section 113 from an outer periphery side of the flange portions while the flange portions are vertically stacked with each other, and by tightening a buckle 120D.

The powder collection section 116 is configured as a cylindrical closed container, and is provided at a center position of its upper face with a circular opening 116a. The opening 116a has an inner diameter that is set at the same value of the inner diameter D2 at the lower end position of the conical section 113.

The powder collection section 116 has an inner diameter D3 that is set at a value more than the inner diameter D1 at the lower end position of the spherical surface portion 112A of the air current inlet section 112. Specifically, D3 is set at a value within a range of the order of 1.2 to 2 of D3/D1.

The powder collection section 116 is provided with the opening 116a whose outer peripheral portion is fixed to the lower end flange portion 113C of the conical section 113. This fixing is performed by welding or bolting, for example.

Next, structure of the air current inlet 114 and the air current outlet 115 will be described.

The air current inlet 114 is formed in a cylindrical shape, and extends horizontally in a tangential direction at a position away from a center position of the air current inlet section 112 in a plan view. The air current inlet 114 has one end fixed to the spherical surface portion 112A of the air current inlet section 112. This fixing is performed by welding or bolting, for example.

The spherical surface portion 112A of the air current inlet section 112 is provided with an opening 112Aa communicating with the air current inlet 114.

Meanwhile, the air current outlet 115 is formed in a cylindrical shape and vertically penetrates the air current inlet section 112 at a center position thereof. Then, an upper end portion of the air current outlet 115 is fixed in the cylindrical opening portion 112B while the air current outlet 115 is fitted into the cylindrical opening portion 112B of the air current inlet section 112. This fixing is performed by welding or bolting, for example.

In the cyclone apparatus 110 of the present embodiment, the air current inlet 114 is provided at a position where an air current mixed with powder is taken into the air current inlet section 116 along an outer peripheral surface of the air current outlet 115.

That is, the air current inlet 114 is arranged in positional relation in which a virtual extension face of its inner peripheral surface is brought into point contact with the outer peripheral surface of the air current outlet 115, or in similar positional relation. Arranging the air current inlet 114 in such positional relation allows the opening 112Aa of the air current inlet section 112 to be positioned at an upper end portion of the spherical surface portion 112A.

The air current inlet 114 has an inner diameter D4 that is set at a value of 1/5 or less of the inner diameter D1 at the lower end position of the air current inlet section. Specifically, D4 is set at a value within a range of the order of 1/7 to 1/5 of D4/D1 (a value of the order of 1/6 of D4/D1, for example).

The air current outlet 115 is set at a position so that its lower end position is below a lower end position of the air current inlet section 112 as well as is above a vertical center position of the conical section 113. That is, a height Hc from the lower end position of the air current outlet 115 to a lower end position of the air current inlet section 112 is set at a value less than 1/2 of Hb with respect of the height Hb of the conical section (more preferably, Hc is less than 1/4 of Hb, such as a value of the order of 1/7 of Hb).

The air current outlet 115 also has an inner diameter D5 that is set so as to be equal to or more than the inner diameter D4 of the air current inlet 114. Specifically, D5 is set at a value within a range of the order of 1 to 1.5 of D5/D4.

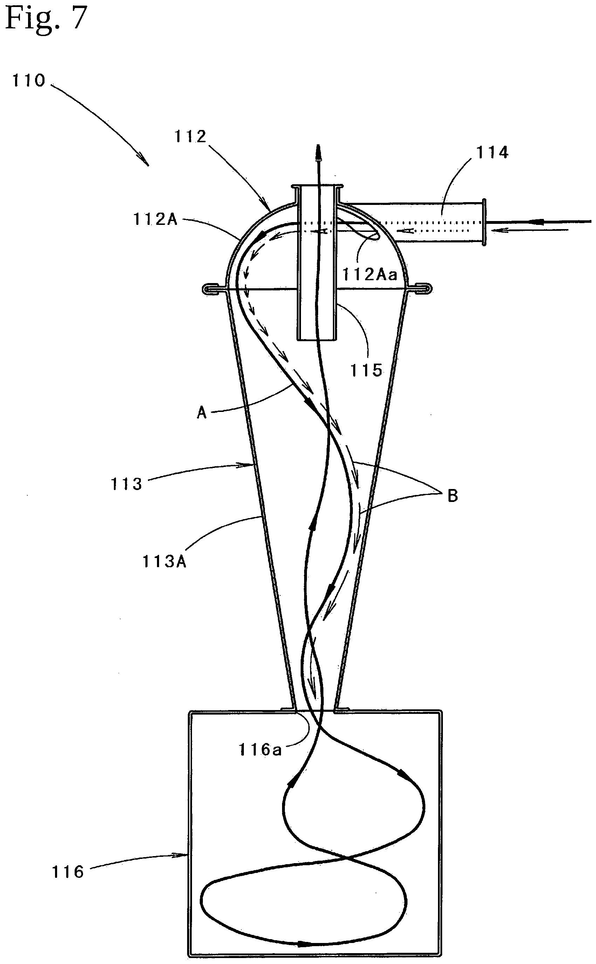

Figure 7 shows a state where an air current mixed with powder (or an air current containing powder) flows in the cyclone apparatus 110 of the present embodiment as with Figure 5.

In Figure 7, a curve A shown by a thick line with an arrow shows a typical flow of an air current mixed with powder. In addition, a plurality of arrows B arranged along the curve A in series shows flow velocity of an air current mixed with powder, and as the arrow increases in length, the flow velocity increases.

As shown in Figure 7, the present embodiment also allows an air current mixed with powder taken in a tangential direction of the air current inlet section 112 from the air current inlet 114 to become an air current swirling along the internal wall surface of the spherical surface portion 112A.

Then, all areas of the internal wall surface of the spherical surface portion 112A are formed in a hemispheric shape along a spherical surface, and the air current mixed with powder is taken through the opening 112Aa provided at an upper end of the spherical surface portion 112A. As a result, the air current mixed with powder greatly changes its flowing direction to a downward direction while smoothly swirling along the internal wall surface of the spherical surface portion 112A. Then, the air current mixed with powder rapidly increases in swirling radius inside the spherical surface portion 112A to rapidly decrease in flow velocity. Accordingly, the air current becomes a considerably slow current when reaching the lower end position of the spherical surface portion 112A, and then the air current in this state transfers to the conical section 113. Thus, even if powder contained in the air current is fine powder of submicron size, the powder is easily separated from the air current to drop along an internal wall surface of the body portion 113A of the conical section 113.

The air current immediately after transferring inside the conical section 113 becomes a swirling current that swirls downward considerably slowly. Due to the body portion 113A of the conical section 113 being formed in an inverted conical shape, as the air current descends inside the body portion 113A, a swirling radius thereof gradually decreases to gradually increase flow velocity thereof. Accordingly, the swirling air current flows rather fast when reaching a lower end position of the conical section 113.

Then, the swirling air current flows into the powder collection section 116 along with powder dropping along the internal wall surface of the body portion 113A, while flowing rather fast. At that time, the swirling air current rapidly decreases in its flow velocity immediately after passing through the opening 116a due to an inner diameter of the powder collection section 116 that is considerably larger than an inner diameter of the opening 116a. As a result, fine powder of submicron size contained in the air current flowing into the powder collection section 116 are separated to be easily stayed inside the powder collection section 116.

Meanwhile, the air current after flowing into the powder collection section 116, in which the fine powder of submicron size have been separated, returns to the conical section 113 through the opening 116a. At that time, since the swirling air current flowing into the powder collection section 116 from the conical section 113 passes through an annular area close to an outer peripheral edge of the opening 116a, the upward air current returning to the conical section 113 passes through a center area of the opening 116a.

The upward air current returned to the conical section 113 ascends through a center of a swirling air current flowing downward along the internal wall surface of the body portion 113A, and is discharged to the outside through the air current outlet 115.

Next, operation effect of the present embodiment will be described.

The cyclone apparatus 110 of the present embodiment includes the air current inlet section 112 in which all areas of the internal wall surface of the spherical surface portion 112A is formed in a hemispheric shape along a spherical surface so that an air current mixed with powder is taken through the opening 112Aa of the spherical surface portion 112A along the outer peripheral surface of the air current outlet 115. As a result, it is possible to take an air current mixed with powder on a most inner periphery side of the spherical surface portion 112A as well as on a most upper side thereof by preventing a direction of the air current mixed with powder from changing due to its collision with the air current outlet 115.

Thus, flow velocity of the air current mixed with powder is allowed to rapidly decrease inside the spherical surface portion 112A to enable the powder contained in the air current to be easily separated even if the powder is submicron size.

In the present embodiment, since a ratio Ha/Hb of heights of the air current inlet section 112 and the conical section 113 is set at 1/2 or less, it is possible to prevent an air current descending in a swirl in the conical section 113 from excessively increasing in speed. Thus, it is possible to carry fine powder of submicron size to the powder collection section 116 by floating the fine powder of the air current.

In addition, an ascending air current in the conical section 113 is prevented from excessively increasing in speed to enable fine powder of submicron size to hardly ascend upward. Even if fine powder of submicron size remain in the air current ascending in the conical section 113, an air current descending in a swirl around the fine powder allows the fine powder of submicron size to be brought back downward and carried to the powder collection section 116.

This kind of effect may be acquired regardless of kinds of powder.
If powder is carbon, it is effective that Ha/Hb is set at from 1/10 to 1/5.

In the present embodiment, the lower end position of the air current outlet 115 is set below the lower end position of the air current inlet section 112 as well as above the vertical center position of the conical section 113 to allow a collection position of powder (or a position of the opening 116a of the powder collection section 116) and a discharge position of an air current from the conical section 113 to be sufficiently away from each other. Thus, powder separated and collected is hardly mixed with the air current at the collection position of powder to enable efficiency of separation and collection of fine powder of submicron size to be further improved. At that time, it is more effective that the height Hc from the lower end position of the air current outlet 115 to the lower end position of the air current inlet section 112 is set less than 1/4 of Hb with respect to the height Hb of the conical section.

The present embodiment sets the inner diameter D1 at the lower end position of the air current inlet section 112 at a value five or more times larger than the inner diameter D4 of the air current inlet 114 to enable effect of reducing angular speed of an air current mixed with powder in the air current inlet section 112 to be sufficiently improved.

The conventional cyclone apparatus 20 shown in Figure 8 is required to increase angular speed of an air current mixed with powder flowing into the cylindrical cyclone body 21 to allow the powder in the air current to be separated by centrifugal force. As a result, an inner diameter of the cyclone body 21 is not allowed to be largely increased with respect to an inner diameter of the air current inlet 23. In contrast, the present embodiment allows an air current mixed with powder to smoothly swirl along the internal wall surface of the spherical surface portion 112A of the air current inlet section 112 to greatly change a flowing direction of the air current downward as well as to rapidly reduce angular speed of the air current, thereby separating the powder in the air current. As a result, it is more effective to increase the inner diameter D1 at the lower end position of the air current inlet section 112 to some extent.

If D1 is set at a value five or more times larger than D4 such as the present embodiment to sufficiently improve effect of reducing angular speed of an air current mixed with powder in the air current inlet section 112, it is possible to improve a separating function of the powder from the air current. At that time, it is possible to improve the separating function for even fine powder of submicron size.

In addition, the present embodiment allows the powder collection section 116 formed in a cylindrical shape to have the inner diameter D3 that is larger than the inner diameter D1 of the connection portion between the air current inlet section 112 the conical section 113 to enable agitation speed of powder collected in the powder collection section 116 to be sufficiently reduced. As a result, it is possible to prevent the powder collected in the powder collection section 116 from being blown away by an air current flowing into the powder collection section 116. Thus, once even fine powder of submicron size is collected in the powder collection section 116, it is possible to easily allow the fine powder to stay in the powder collection section 116.

Although the powder collection section 116 formed as a cylindrical closed container is described in the present embodiment, a structure in a shape other than that is also available. Even in such a case, if the upper end of the powder collection section 116 has an inner diameter more than the inner diameter D1 of the connection portion between the air current inlet section 112 and the conical section 113 (such as a structure in an inverted conical shape), operation effect as with the present embodiment may be acquired.

As above, the first and second embodiments have been described with respect to aspects of the cyclone apparatus in accordance with the present invention.

Respective setting values, such as components of the cyclone apparatus in accordance with the present invention, and an amount of an air current mixed with powder to be taken, are not limited to those of the first and second embodiments, and it is needless to say that a person skilled in the art may change those anytime within a range of technical ideas of the present invention.

The cyclone apparatus in accordance with the present invention may be used in a vacuum cleaner in combination with a suction blower, and also may be used in a fuel-cell vehicle or a fuel-cell generator by being attached to a suction port of an air cleaner thereof, for example as application.

### Industrial Applicability

In recent years, a tendency of requiring fine powder that has a particle diameter of 1 µm or less as well as a controlled distribution of the particle diameters has been intensified to increase an added value of powder. Thus, the cyclone apparatus of the present invention is expected to be widely used in industrial processes handling powder, such as classification and pulverization operation for fine powder, so that industrial applicability is extremely wide.

### Reference Signs List

10 cyclone apparatus of first embodiment
12 air current inlet section
13 conical section
14 air current inlet
15 air current outlet
16 powder collection section
20 conventional cyclone apparatus
21 cyclone body
22 conical section
23 air current inlet
24 powder collection section
25 air current outlet
110 cyclone apparatus of second embodiment
112 air current inlet section
112A spherical surface portion
112Aa opening
112B cylindrical opening portion
112C outer periphery flange portion
113 conical section
113A body portion
113B upper end flange portion
113C lower end flange portion
114 air current inlet
115 air current outlet
116 powder collection section
116a opening
120 ring-shaped fixture
120A, 120B half-split ring
120C pin
120D buckle
D1 inner diameter at lower end position of air current inlet section
D2 inner diameter at lower end position of conical section
D3 inner diameter of powder collection section
D4 inner diameter of air current inlet
D5 inner diameter of air current outlet
Ha height of air current inlet section
Hb height of conical section
Hc height from lower end position of air current outlet to lower end position of air current inlet section

## Claims

1. A cyclone apparatus (110)that separates powder mixed in an air current from a swirling air current to collect the powder, the cyclone apparatus (110) comprising:
an air current inlet section (112) that is provided with an air current inlet (114) for taking an air current mixed with powder from a tangential direction and that has a diameter gradually increasing downward; and
a conical section (113)in an inverted conical shape that is connected to a lower end of the air current inlet section (112) and that has a diameter gradually decreasing downward, wherein a ratio (Ha/Hb) of respective heights of the air current inlet section and the conical section is set within a range from 1/10 to 1/5,
**characterized in that** the air current inlet section (112) has a hemispheric internal structure comprising a spherical surface portion (112A) in which all areas of an internal wall surface is formed in a hemispheric shape along a spherical surface, the spherical surface portion (112A) being provided with an opening (112Aa) at the upper end communicating with the air current inlet (114) and the lower end of the spherical surface portion being connected to the upper end of the conical section.

2. The cyclone apparatus (110) according to any one of Claim 1 , further comprising an air current outlet (115) provided at a center position of the air current inlet section (112) so as to vertically penetrate the air current inlet section (112) for discharging an air current from which powder has been separated to an outside, wherein a lower end position of the air current outlet (115) is set below a lower end position of the air current inlet section (112) as well as above a vertical center position of the conical section (113).

3. The cyclone apparatus (110) according to Claim 2, wherein the air current inlet (114) is provided at a position where an air current mixed with powder is taken into the air current inlet section (112) along an outer peripheral surface of the air current outlet (115).

4. The cyclone apparatus (110) according to any one of Claims 1 to 3, wherein an inner diameter of a connection portion between the air current inlet section (112) and the conical section (113) is set at a value five or more times larger than an inner diameter of the air current inlet (114).

5. The cyclone apparatus according to any one of Claims 1 to 4, further comprising a powder collection section (116) provided with an opening (116a) connected to a lower end of the conical section (113) for collecting powder separated from a swirling air current, wherein an upper end of the powder collection section has an inner diameter (D3) larger than the inner diameter (D1) of the connection portion between the air current inlet section (112) and the conical section (113).

## Patentansprüche

1. Ein Fliehkraftabscheider (110), der in einem Luftstrom gemischtes Pulver von einem wirbelnden Luftstrom trennt, um das Pulver zu sammeln, wobei der Fliehkraftabscheider (110) umfasst:
einen Luftstromeinlassabschnitt (112), der mit einem Luftstromeinlass (114) versehen ist, um einen mit Pulver gemischten Luftstrom aus einer tangentialen Richtung aufzunehmen, und dessen Durchmesser allmählich nach unten zunimmt; und
einen kegelförmigen Abschnitt (113) in einer umgekehrten Kegelform, der mit einem unteren Ende des Luftstromeinlassabschnitts (112) verbunden ist und der einen Durchmesser aufweist, der allmählich nach unten abfällt, wobei ein Verhältnis (Ha/Hb) der entsprechenden Höhe des Luftstromeinlassabschnitts und des konischen Abschnitts innerhalb eines Bereichs von 1/10 bis 1/5 eingestellt ist,
**dadurch gekennzeichnet, dass** der Luftstromeinlassabschnitt (112) eine hemisphärische innere Struktur aufweist, die einen sphärischen Flächenteil (112A) umfasst, in welchem alle Bereiche einer inneren Wandfläche in einer hemisphärischen Form entlang einer sphärischen Fläche ausgebildet sind, wobei der sphärische Flächenteil (112A) an dem oberen Ende mit einer mit dem Luftstromeinlass (114) verbundenen Öffnung (112Aa) versehen ist, und das untere Ende des sphärischen Flächenteils mit dem oberen Ende des konischen Abschnitts verbunden ist.

2. Der Fliehkraftabscheider (110) nach Anspruch 1, weiter umfassend einen an einer Zentralposition des Luftstromeinlassabschnitts (112) vorgesehenen Luftstromauslass (115), um den Luftstromeinlassabschnitt (112) vertikal zu durchdringen, um einen Luftstrom, von dem Pulver getrennt wurde, zu einer Außenseite abzuleiten, wobei eine untere Endposition des Luftstromauslasses (115) unter einer unteren Endposition des Luftstromeinlassabschnitts (112) sowie oberhalb einer vertikalen Zentralposition des kegelförmigen Abschnitts (113) eingestellt ist.

3. Der Fliehkraftabscheider (110) nach Anspruch 2, wobei der Luftstromeinlass (114) an einer Position vorgesehen ist, wo ein mit Pulver gemischter Luftstrom in den Luftstromeinlassabschnitt (112) entlang einer äußeren peripheren Fläche des Luftstromauslasses (115) aufgenommen ist.

4. Der Fliehkraftabscheider (110) nach einem der Ansprüche 1 bis 3, wobei ein Innendurchmesser des Verbindungsabschnitts zwischen der Luftstromeinlasssektion (112) und der kegelförmigen Sektion (113) auf einen Wert eingestellt ist, der fünf oder mehr mal größer ist als ein Innendurchmesser des Luftstromeinlasses (114).

5. Der Fliehkraftabscheider (110) nach einem der Ansprüche 1 bis 4, weiter umfassend einen Pulversammelabschnitt (116), der mit einer Öffnung (116a) versehen ist, die mit einem unteren Ende des kegelförmigen Abschnitts (113) verbunden ist, um von einem wirbelnden Luftstrom getrenntes Pulver zu sammeln, wobei ein oberes Ende des Pulversammelabschnitts einen Innendurchmesser (D3) aufweist, der größer ist als der innere Durchmesser (D1) des Verbindungsteils zwischen des Luftstromeinlassabschnitts (112) und des kegelförmigen Abschnitts (113).

## Revendications

1. Appareil à cyclone (110) qui sépare de la poudre mélangée dans un écoulement d'air d'un écoulement d'air tourbillonnaire afin de collecter la poudre, l'appareil à cyclone (110) comprenant :
une section d'entrée d'écoulement d'air (112) qui est munie d'une entrée d'écoulement d'air (114) pour recevoir un écoulement d'air mélangé avec de la poudre provenant d'une direction tangentielle et qui présente un diamètre croissant progressivement vers le bas ; et
une section conique (113) selon une forme de cône inversé qui est connectée à une extrémité inférieure de la section d'entrée d'écoulement d'air (112) et qui présente un diamètre décroissant progressivement vers le bas, dans lequel un rapport (Ha/Hb) de hauteurs respectives de la section d'entrée d'écoulement d'air et de la section conique est défini à l'intérieur d'une plage de 1/10 à 1/5 ;
**caractérisé en ce que** la section d'entrée d'écoulement d'air (112) présente une structure interne hémisphérique qui comprend une partie de surface sphérique (112A) dans laquelle toutes les zones d'une surface de paroi interne sont formées selon une forme hémisphérique suivant une surface sphérique, la partie de surface sphérique (112A) étant munie d'une ouverture (112Aa) au niveau de l'extrémité supérieure qui communique avec l'entrée d'écoulement d'air (114) et l'extrémité inférieure de la partie de surface sphérique étant connectée à l'extrémité supérieure de la section conique.

2. Appareil à cyclone (110) selon la revendication 1, comprenant en outre une sortie d'écoulement d'air (115) qui est prévue au niveau d'une position centrale de la section d'entrée d'écoulement d'air (112) de manière à ce qu'elle pénètre verticalement la section d'entrée d'écoulement d'air (112) pour décharger sur un extérieur un écoulement d'air duquel la poudre a été séparée, dans lequel une position d'extrémité inférieure de la sortie d'écoulement d'air (115) est définie au-dessous d'une position d'extrémité inférieure de la section d'entrée d'écoulement d'air (112) de même qu'au-dessus d'une position centrale verticale de la section conique (113).

3. Appareil à cyclone (110) selon la revendication 2, dans lequel l'entrée d'écoulement d'air (114) est prévue au niveau d'une position au niveau de laquelle un écoulement d'air mélangé avec de la poudre est reçu à l'intérieur de la section d'entrée d'écoulement d'air (112) suivant une surface périphérique externe de la sortie d'écoulement d'air (115).

4. Appareil à cyclone (110) selon l'une quelconque des revendications 1 à 3, dans lequel un diamètre interne d'une partie de connexion entre la section d'entrée d'écoulement d'air (112) et la section conique (113) est défini à une valeur qui est cinq fois plus grande ou plus qu'un diamètre interne de l'entrée d'écoulement d'air (114).

5. Appareil à cyclone (110) selon l'une quelconque des revendications 1 à 4, comprenant en outre une section de collecte de poudre (116) munie d'une ouverture (116a) qui est connectée à une extrémité inférieure de la section conique (113) pour collecter la poudre qui est séparée d'un écoulement d'air tourbillonnaire, dans lequel une extrémité supérieure de la section de collecte de poudre présente un diamètre interne (D3) plus grand que le diamètre interne (D1) de la partie de connexion entre la section d'entrée d'écoulement d'air (112) et la section conique (113).
